# EUROPÄISCHE PATENTSCHRIFT

(11) **EP 1 073 544 B1**
(45) Veröffentlichungstag und Bekanntmachung des Hinweises auf die Patenterteilung: **26.06.2002**
(21) Anmeldenummer: 99919220.6
(22) Anmeldetag: 09.04.1999
(51) Int. Cl.: B26B 19/38

(54) **VERFAHREN ZUR DATENÜBERTRAGUNG ZWISCHEN EINEM ELEKTROKLEINGERÄT UND EINEM MIT DIESEM VERBINDBAREN ELEKTRISCHEN ZUSATZGERÄT, SOWIE ENTSPRECHEND AUSGESTALTETE GERÄTE**
METHOD FOR TRANSMITTING DATA BETWEEN A SMALL ELECTRICAL DEVICE AND A SUPPLEMENTARY ELECTRICAL DEVICE WHICH CAN BE CONNECTED THERETO, AND DEVICES CONFIGURED ACCORDINGLY
PROCEDE POUR LA TRANSMISSION DE DONNEES ENTRE UN PETIT APPAREIL ELECTRIQUE ET UN APPAREIL ELECTRIQUE SUPPLEMENTAIRE POUVANT ETRE RELIE A CE DERNIER, AINSI QU'APPAREILS DE CONFIGURATION CORRESPONDANTE

(30) Priorität: 18.04.1998 DE 19817273
(43) Veröffentlichungstag der Anmeldung: 07.02.2001
(73) Patentinhaber: Braun GmbH, 61476 Kronberg (DE)
(72) Erfinder: WOHLRABE, Frank, D-61476 Kronberg (DE)
(86) Internationale Anmeldenummer: EP9902401
(87) Internationale Veröffentlichungsnummer: WO9954096

(56) Entgegenhaltungen:
- EP-A- 0 148 458
- DE-A- 4 204 237
- DE-A- 4 402 236
- DE-A- 19 612 089
- US-A- 4 910 753
- US-A- 5 504 864

## Beschreibung

Die vorliegende Erfindung betrifft ein Verfahren zur Datenübertragung zwischen einem Elektrokleingerät, beispielsweise einem elektrischen Haarschneidegerät, einer elektrischen Zahnbürste oder einem Haushaltsgerät, und einem mit diesem verbindbaren elektrischen Zusatzgerät, beispielsweise einem Lade-, Reinigungs- oder Diagnosegerät, sowie entsprechend ausgestaltete Geräte.

Aus der DE 196 12 089 A1 ist ein Rasierapparat oder ein mit diesem zusammenwirkendes Gerät mit einem Mikrocontroller und einer Anzeigevorrichtung für aktuelle Betriebszustände bekannt, der in einen speziellen Ausgabebetriebszustand versetzt werden kann, in dem bestimmte im Mikrocontroller gespeicherte Informationen über die bisherigen Betriebszustände des Rasierapparats oder des Geräts abrufbar sind. Der separate Ausgabebetriebszustand wird beispielsweise dadurch aktiviert, daß durch ein spezielles Netzgerät in bestimmter zeitlicher Abfolge unterschiedliche Spannungen an den Netzanschluß des Rasierapparats oder des Geräts gelegt werden. Die Ausgabe der gespeicherten Informationen erfolgt entweder mittels der vorhandenen Anzeigevorrichtung oder über eine separate Schnittstelle.

Aus der DE 196 06 719 C2 ist ein elektrischer Rasierapparat mit einem Controller bekannt, der ein die Notwendigkeit einer Reinigung des Rasierapparats anzeigendes Signal abgeben kann, sowie eine Reinigungsvorrichtung für einen Rasierapparat, die gleichzeitig auch als Halterung für den Rasierapparat dient. Ist der Rasierapparat in die Reinigungsvorrichtung eingelegt, kann der Controller über den Netzkontakt des Rasierapparats mit der Reinigungsvorrichtung so verbunden sein, daß eine Signalübertragung zwischen dem Rasierapparat und der Reinigungsvorrichtung möglich ist. Damit die Reinigungsvorrichtung nicht unnötigerweise bei jedem Ablegen des Rasierapparats einen Reinigungsvorgang durchführt, wird diese nur dann aktiviert, wenn der Controller ein entsprechendes Signal der Reinigungsvorrichtung zuführt. Einzelheiten über zur Signalübertragung verwendbare Verfahren oder Schaltungen sind nicht angegeben.

Es ist daher Aufgabe der vorliegenden Erfindung ein besonders einfaches Verfahren zur Datenübertragung zwischen einem Elektrokleingerät nämlich einem elektrischen Haarschneidegerät einer elektrischen Zahubürste oder einem Haushaltsgerät, und einem mit diesem verbindbaren elektrischen Zusatzgerät, sowie schaltungsmäßig entsprechend ausgestaltete Geräte anzugeben.

Diese Aufgabe wird beim erfindungsgemäßen Verfahren in der Weise gelöst, daß das Zusatzgerät einem Energieversorgungsanschluß des Elektrokleingeräts einen elektrischen Strom, eine elektrische Spannung oder ein elektrisches und/oder magnetisches Feld zuführt, der/die/das je nach gewünschter Richtung der Datenübertragung vom Elektrokleingerät oder vom Zusatzgerät mit einem entsprechenden Datensignal moduliert wird. Im jeweiligen empfangenden Gerät erfolgt eine Demodulation. Einem Elektrokleingerät mit Netzanschlußbuchse wird der Strom bzw. die Spannung vorzugsweise über die Netzanschlußbuchse zugeführt, einem primärbatteriebetriebenen Elektrokleingerät über die Batteriekontakte. Bei einem sekundärbatteriebetriebenen Elektrokleingerät ohne sonstige extern zugängliche Anschlüsse bietet sich insbesondere in an sich bekannter Weise eine induktive Energieübertragung an. Daher ist in allen genannten Fällen für die Datenübertragung kein zusätzlicher Anschluß am Elektrokleingerät erforderlich.

Die Datenübertragung kann auch dann erfolgen, wenn das Elektrokleingerät nicht in Betrieb ist. Bei einem Elektrokleingerät, das eine wiederaufladbare Batterie aufweist, kann die Datenübertragung beispielsweise durch Modulation des Ladestroms bzw. der Ladespannung erfolgen, d.h. während des Aufladens. Bei einem besonders einfach realisierbaren Verfahren erfolgt die Modulation durch Ein/Aus-Schalten des Stroms bzw. der Spannung oder des Feldes. Natürlich sind auch alle anderen bekannten Verfahren zur Datenübertragung anwendbar.

Ein erfindungsgemäß ausgestaltetes Elektrokleingerät weist einen Energieversorgungsanschluß auf, über den es von einem Zusatzgerät über eine Leitung mit Strom versorgt werden kann, an den das Zusatzgerät eine Spannung anlegen kann oder der vom Zusatzgerät mit einem elektrischen und/oder magnetischen Feld beaufschlagbar ist. Ein erfindungsgemäß ausgestaltetes Zusatzgerät, beispielsweise ein Diagnose- oder Reinigungsgerät, ist dementsprechend so ausgestaltet, daß es einen Strom, eine Spannung oder ein Feld mit einer für die Datenübertragung geeigneten Größe an das Elektrokleingerät liefern kann. Es kann zusätzlich auch als Strom- bzw. Spannungsversorgung und/oder als Ladegerät für das Elektrokleingerät verwendbar sein.

Die Erfindung hat den Vorteil, daß dann, wenn das Elektrokleingerät eine Anzeigeeinrichtung aufweist, beim Zusatzgerät auf eine Anzeigeeinrichtung verzichtet werden kann, da die ggfs. anzuzeigenden Daten zum Elektrokleingerät übertragen und auf dessen Anzeigeeinrichtung ausgegeben werden können. Umgekehrt können im Elektrokleingerät gespeicherte Daten, beisielsweise die Anzahl oder Dauer der in der Vergangenheit erfolgten Benutzungen und/oder die Ladezustände, die dabei ein im Elektrokleingerät eingebauter Akku angenommen hat, zum Zusatzgerät übertragen, und dort auf einer größeren Anzeigeeinrichtung in übersichtlicherer Weise anzeigt werden, als dies auf der Anzeigeeinrichtung des Elektrokleingeräts möglich wäre.

Unter Datenübertragung ist aber auch die Übertragung von Steuerbefehlen zu verstehen, mit denen beispielsweise vom Zusatzgerät aus bestimmte Funktionen des Elektrokleingeräts aktiviert werden können. Handelt es sich beispielsweise beim Elektrokleingerät um einen elektrischen Rasierapparat und beim Zusatzgerät um ein Rasierer-Reinigungsgerät, wie es in der DE 44 02 236 C2 beschrieben ist, so kann das Reinigungsgerät beispielsweise zum richtigen Zeitpunkt im Reinigungszyklus den Rasierer ein- und ausschalten. Da der Rasierer in diesem Reinigungsgerät "auf dem Kopf" steht, kann das Reinigungsgerät einen Steuerbefehl zur Umschaltung der Anzeigeeinrichtung des Rasierers abgeben, damit die dort ausgegebenen Informationen statt "richtig herum" ebenfalls "auf dem Kopf" dargestellt werden, und somit leicht lesbar sind.

Nachstehend wird die Erfindung anhand zweier Ausführungsbeispiele erläutert, die in den Figuren dargestellt sind. Weitere Ausgestaltungen sind in der Beschreibung beschrieben. Es zeigen
- Fig. 1: schematisch ein erfindungsgemäßes Elektrokleingerät und Zusatzgerät mit leitungsgebundener Datenübertragung durch Modulation eines Gleichstroms;
- Fig. 2: schematisch ein erfindungsgemäßes Elektrokleingerät und Zusatzgerät mit induktiver Datenübertragung durch Modulation eines Wechselstroms.

Soll eine Datenübertragung vom Zusatzgerät zum Elektrokleingerät erfolgen, weist das Zusatzgerät eine Einrichtung zur Modulation der von ihm gelieferten Energie und das Elektrokleingerät eine Einrichtung zur Demodulation auf. Soll eine Datenübertragung in entgegengesetzter Richtung erfolgen, weist das Zusatzgerät eine Einrichtung zur Demodulation und das Elektrokleingerät eine Einrichtung zur Modulation auf. Für eine Datenübertragung in beiden Richtungen weisen sowohl das Elektrokleingerät als auch das Zusatzgerät Einrichtungen zur Modulation und Einrichtungen zur Demodulation auf.

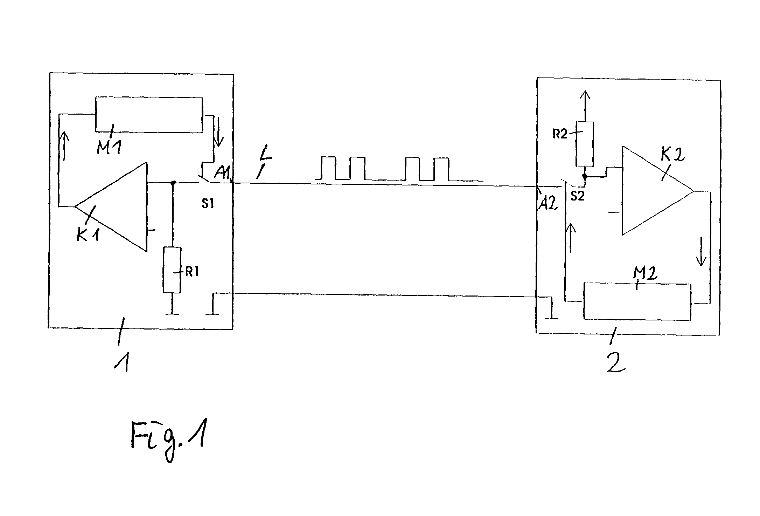

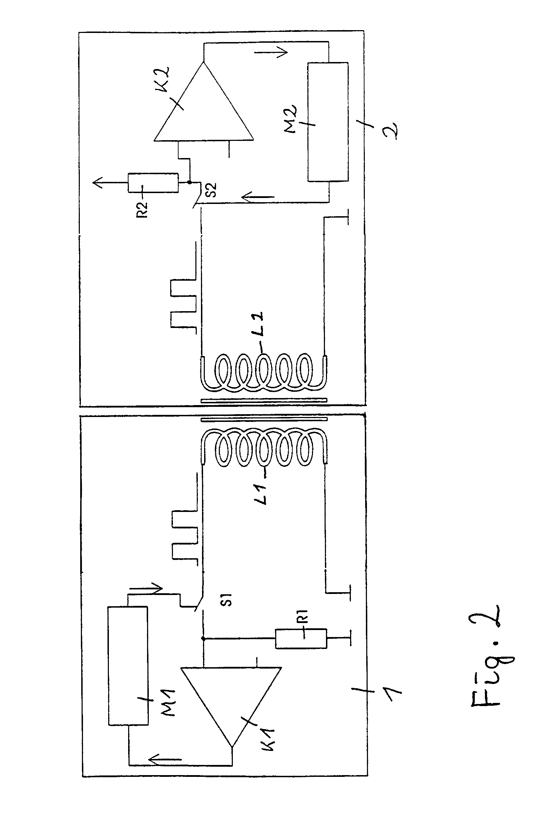

Die in den Figuren 1 und 2 dargestellten erfindungsgemäßen Geräte, nämlich ein Elektrokleingerät 1 und ein Zusatzgerät 2, sind für bidirektionale Datenübertragung durch Strommodulation geeignet und hinsichtlich der zur Datenübertragung erforderlichen Einrichtungen identisch. Beide Geräte enthalten gleichermaßen eine Einrichtung zur Demodulation, die einen Stromsensor aufweist, eine Einrichtung zur Modulation, die einen steuerbaren Schalter S1, S2 aufweist, der mit dem Stromsensor und einem Stromversorgungsanschluß A1, A2 verbunden ist, und einen Mikrokontroller M1, M2, der mit dem Stromsensor und dem steuerbaren Schalter S1, S2 verbunden ist.

Der Mikrokontroller verarbeitet die zu übertragenden Daten, d.h. im Sendefall erzeugt er ein Datensignal, das dem steuerbaren Schalter zugeführt wird, sodaß der durch den Stromversorgungsanschluß fließende Strom durch entsprechendes Ein/Aus-Schalten amplitudenmoduliert wird. Im Empfangsfall hält der Mikrokontroller den steuerbaren Schalter geschlossen, sodaß der Stromsensor mit dem Stromversorgungsanschluß verbunden ist, und gewinnt die Daten aus dem vom Stromsensor gelieferten Signal zurück. Der Stromsensor ist durch einen Komparator K1, K2 und einen Widerstand R1, R2 realisiert, und erzeugt aus einem amplitudenmodulierten Strom ein digitales Signal.

Bei anderen Ausführungen des erfindungsgemäßen Elektrokleingeräts bzw. Zusatzgeräts können statt des steuerbaren Schalters und des Stromsensors andere an sich bekannte Modulations- bzw. Demodulationsschaltungen vorgesehen sein, durch die eine Datenübertragung beispielsweise durch Modulation einer Gleichspannung oder andere Modulationsverfahren insbesondere Frequenz-, Phasen- oder Pulsmodulation realisiert sein.

Nachfolgend wird das Verfahren zur Datenübertragung anhand der Figur 1 beschrieben. Beide Geräte sind durch eine Leitung L verbunden, die die Stromversorgungsanschlüsse A1, A2 der Geräte miteinander verbindet. Der steuerbare Schalter S1 bzw. S2 ist im Grundzustand bei beiden Geräten geschlossen. Daher liefert das Zusatzgerät 2 einen nichtmodulierten Strom ans Elektrokleingerät 1.

Wenn Daten vom Zusatzgerät ans Elektrokleingerät übertragen werden sollen, prüft der Mikrokontroller M2 des Zusatzgeräts mit Hilfe seines Stromsensors, ob dieser Strom unmoduliert ist, und daher für eine Datenübertragung verwendbar ist. Ist der Strom unmoduliert, steuert er daraufhin den steuerbaren Schalter S2 mit einem den zu übertragenden Daten, beispielsweise einer Befehlssequenz, entsprechenden Datensignal an, wodurch dieser solange in definierter Abfolge geöffnet und geschlossen wird, bis diese Daten ausgesendet sind. Gleichzeitig stellt der Mikrokontroller M1 des Elektrokleingeräts mit Hilfe seines Stromsensors fest, daß der gelieferte Strom moduliert ist, und demoduliert die empfangenen Daten.

Eine Datenübertragung in umgekehrter Richtung, d.h. vom Elektrokleingerät ans Zusatzgerät, erfolgt entsprechend. Zunächst prüft der Mikrokontroller M1 des Elektrokleingeräts mit Hilfe seines Stromsensors, ob der gelieferte Strom unmoduliert ist, und daher für eine Datenübertragung verwendbar ist. Ist der Strom unmoduliert, steuert er daraufhin den steuerbaren Schalter S1 mit einem den zu übertragenden Daten, beispielsweise einer Befehlssequenz, entsprechenden Datensignal an, wodurch dieser solange in definierter Abfolge geöffnet und geschlossen wird, bis diese Daten ausgesendet sind. Gleichzeitig stellt der Mikrokontroller M2 des Zusatzgeräts mit Hilfe seines Stromsensors fest, daß der gelieferte Strom moduliert ist, und demoduliert die empfangenen Daten.

Das in Figur 2 dargestellte Elektrokleingerät und Zusatzgerät unterscheiden sich von den in Figur 1 dargestellten Geräten lediglich durch je eine Spule L1, L2, über die in an sich bekannter Weise eine induktive Energie- und/oder Datenübertragung erfolgen kann. Erforderlichenfalls vorzusehende Einrichtungen zur Gleichrichtung oder Glättung des modulierten Wechselstroms sind aus Gründen der Übersichtlichkeit nicht dargestellt.

## Patentansprüche

1. Verfahren zur Übertragung von Daten zwischen einem Elektrokleingerät, nämlich einem elektrischen Haarschneidegerät, insbesondere einem Rasierer, einer elektrischen Zahnbürste oder einem Haushaltsgerät, das einen Energieversorgungsanschluß aufweist, und einem mit diesem verbindbaren elektrischen Zusatzgerät, bei dem das Zusatzgerät (2) dem Energieversorgungsanschluß des Elektrokleingeräts (1) einen elektrischen Strom, eine elektrische Spannung oder ein elektrisches und/oder magnetisches Feld zuführt, der/die/das zwecks Datenübertragung vom Elektrokleingerät oder vom Zusatzgerät moduliert wird.

2. Verfahren nach Anspruch 1,
**dadurch gekennzeichnet,**
**daß** bei einem Elektrokleingerät, das eine wiederaufladbare Batterie aufweist, der Ladestrom bzw. die Ladespannung moduliert wird.

3. Verfahren nach Anspruch 1 oder 2,
**dadurch gekennzeichnet,**
**daß** die Modulation durch Ein/Aus-Schalten des Stroms, der Spannung oder des Feldes erfolgt.

4. Elektrisches Zusatzgerät, nämlich Reinigungs- oder Diagnosegerät insbesondere Rasierer-Reinigungsgerät, das einem Elektrokleingerät einen elektrischen Strom, eine elektrische Spannung oder ein elektrisches und/oder magnetisches Feld zuführen kann,
**dadurch gekennzeichnet,**
**daß** es eine Einrichtung zur Modulation (S2, M2) und/oder Demodulation (R2, K2, M2) des/der dem Elektrokleingerät (1) zugeführten elektrischen Stroms, elektrischen Spannung oder elektrischen und/oder magnetischen Feldes aufweist.

5. Elektrokleingerät mit einem Energieversorgungsanschluß, nämlich elektrisches Haarschneidegerät, insbesondere Rasierer, elektrische Zahnbürste oder Haushaltsgerät,
**dadurch gekennzeichnet,**
**daß** es eine Einrichtung zur Modulation (S1, M1) und/oder Demodulation (R1, K1, M1) eines/einer seinem Energieversorgungsanschluß (A1) zugeführten elektrischen Stroms, elektrischen Spannung oder elektrischen und/oder magnetischen Feldes aufweist.

6. Gerät nach Anspruch 4 oder 5,
**dadurch gekennzeichnet,**
**daß** die Modulationseinrichtung einen steuerbaren Schalter (S1; S2) sowie eine Steuerschaltung zur Ansteuerung des steuerbaren Schalters aufweist.

7. Gerät nach Anspruch 4, 5 oder 6,
**dadurch gekennzeichnet,**
**daß** die Demodulationseinrichtung einen Stromsensor oder einen Spannungssensor sowie eine Auswerteschaltung aufweist.

8. Gerät nach Anspruch 7,
**dadurch gekennzeichnet,**
**daß** der Stromsensor oder der Spannungssensor einen Widerstand (R1; R2) und einen Komparator (K1; K2) aufweist.

9. Gerät nach einem der Ansprüche 6 bis 8,
**dadurch gekennzeichnet,**
**daß** die Steuerschaltung und/oder die Auswerteschaltung durch einen Mikrokontroller (M1; M2) realisiert sind.

10. Elektrokleingerät nach einem der Ansprüche 5 bis 9,
**dadurch gekennzeichnet,**
**daß** es eine umschaltbare Anzeigeeinrichtung aufweist, auf der Informationen wahlweise "richtig herum" oder "auf dem Kopf" darstellbar sind.

## Claims

1. A method of transmitting data between a small electric appliance, namely an electric hair cutting apparatus, in particular a shaver, an electric toothbrush or a household appliance having a power supply connection, and a supplementary electric appliance connectable therewith, wherein the supplementary appliance (2) delivers to the power supply connection of the small electric appliance (1) an electric current, an electric voltage or an electric and/or magnetic field which is modulated either by the small electric appliance or by the supplementary appliance for data transmission purposes.

2. The method as claimed in claim 1,
**characterized in that** in a small electric appliance having a rechargeable battery the charging current or the charging voltage is modulated.

3. The method as claimed in claim 1 or 2,
**characterized in that** modulation is effected by turning the current, the voltage or the field on and off.

4. A supplementary electric appliance, namely a cleaning or diagnostic device, in particular a shaver cleaning device, which is adapted to supply an electric current, an electric voltage or an electric and/or magnetic field to a small electric appliance,
**characterized in that** it includes a device for modulating (S2, M2) and/or demodulating (R2, K2, M2) the electric current, the electric voltage or the electric and/or magnetic field supplied to the small electric appliance (1).

5. A small electric appliance having a power supply connection, namely an electric hair cutting apparatus, in particular a shaver, an electric toothbrush or a household appliance,
**characterized in that** it includes a device for modulating (S1, M1) and/or demodulating (R1, K1, M1) an electric current, an electric voltage or an electric and/or magnetic field supplied to its power supply connection (A1).

6. The appliance as claimed in claim 4 or 5,
**characterized in that** the modulating device includes a controllable switch (S1; S2) as well as a control circuit for driving the controllable switch.

7. The appliance as claimed in claim 4, 5 or 6,
**characterized in that** the demodulating device includes a current sensor or a voltage sensor as well as an evaluation circuit.

8. The appliance as claimed in claim 7,
**characterized in that** the current sensor or the voltage sensor includes a resistor (R1; R2) and a comparator (K1; K2).

9. The appliance as claimed in any one of the claims 6 to 8,
**characterized in that** the control circuit and/or the evaluation circuit are implemented by a microcontroller (M1; M2).

10. The small electric appliance as claimed in any one of the claims 5 to 9,
**characterized in that** it includes a switchable indicating device enabling information to be displayed selectively "in the proper position" or "upside down".

## Revendications

1. Procédé pour transmettre des données entre un petit appareil électrique, à savoir une tondeuse électrique pour cheveux, notamment un rasoir, une brosse à dents électrique ou un appareil ménager, qui comporte une borne d'alimentation en énergie, et un appareil électrique supplémentaire pouvant être relié à cette borne, et selon lequel l'appareil supplémentaire (2) envoie à la borne d'alimentation en énergie du petit appareil électrique (1) un courant électrique, une tension électrique ou un champ électrique et/ou magnétique, qui est modulé, en vue de la transmission de données, par le petit appareil électrique ou par l'appareil supplémentaire.

2. Procédé selon la revendication 1, **caractérisé en ce que** dans le cas d'un petit appareil électrique, qui comporte une batterie rechargeable, le courant de charge ou la tension de charge est modulé.

3. Procédé selon la revendication 1 ou 2, **caractérisé en ce que** la modulation s'effectue par branchement / interruption du courant, de la tension ou du champ.

4. Appareil électrique supplémentaire, à savoir un appareil de nettoyage ou de diagnostic, notamment appareil de rasage / nettoyage, qui peut envoyer à un petit appareil électrique un courant électrique, une tension électrique ou un champ électrique et/ou magnétique, **caractérisé en ce qu'**il comporte un dispositif pour moduler (S2, M2) et/ou démoduler (R2, K2, M2) le courant électrique, la tension électrique ou le champ électrique et/ou magnétique, envoyé au petit appareil électrique (1).

5. Petit appareil électrique comportant une borne d'alimentation en énergie, à savoir petit appareil électrique pour couper les cheveux, notamment rasoir, brosse à dents électriques ou appareil ménager, **caractérisé en ce qu'**il comporte un dispositif pour moduler (S1, M1) et/ou démoduler (R1, K1, M1) un courant électrique, une tension électrique ou un champ électrique et/ou magnétique, envoyé à sa borne d'alimentation en énergie (A1).

6. Appareil selon la revendication 4 ou 5, **caractérisé en ce que** le dispositif de modulation comporte un interrupteur commandable (S1; S2) ainsi qu'un circuit de commande pour la commande de l'interrupteur commandable.

7. Appareil selon la revendication 4, 5 ou 6, **caractérisé en ce que** le dispositif de démodulation comporte un capteur de courant ou un capteur de tension ainsi qu'un circuit d'évaluation.

8. Appareil selon la revendication 7, **caractérisé en ce que** le capteur de courant ou le capteur de tension comporte une résistance (R1; R2) et un comparateur (K1; K2).

9. Appareil selon l'une des revendications 6 à 8, **caractérisé en ce que** le circuit de commande et/ou le circuit d'évaluation sont formés par un microcontrôleur (M1; M2).

10. Petit appareil électrique selon l'une des revendications 5 à 9, **caractérisé en ce qu'**il comporte un dispositif d'affichage commutable, sur lequel des informations doivent être représentées au choix ("correctement autour") ou "sur la tête".
